# EUROPÄISCHE PATENTSCHRIFT

(11) **EP 3 179 649 B1**
(45) Veröffentlichungstag und Bekanntmachung des Hinweises auf die Patenterteilung: **11.09.2019**
(21) Anmeldenummer: 15198225.3
(22) Anmeldetag: 07.12.2015
(51) Int. Cl.: H04J 14/02, H04B 10/032, H04B 10/038

(54) **VERFAHREN UND SYSTEM ZUR EFFEKTIVEN DATENÜBERTRAGUNG IN EINEM OPTISCHEN TELEKOMMUNIKATIONSNETZ IM WELLENLÄNGEN-MULTIPLEX-BETRIEB**
METHOD AND SYSTEM FOR EFFECTIVE DATA TRANSMISSION IN AN OPTICAL TELECOMMUNICATION NETWORK IN WAVELENGTH MULTIPLEX OPERATION
PROCEDE ET SYSTEME DE TRANSMISSION EFFICACE DE DONNEES DANS UN RESEAU DE TELECOMMUNICATION OPTIQUE EN MULTIPLEXAGE

(43) Veröffentlichungstag der Anmeldung: 14.06.2017
(73) Patentinhaber: Deutsche Telekom AG, 53113 Bonn (DE)
(72) Erfinder: Gunkel, Matthias, 64291 Darmstadt (DE); Krannig, Simon, 64295 Darmstadt (DE)
(74) Vertreter: Schwöbel, Thilo K.

(56) Entgegenhaltungen:
- DE-A1- 4 421 305
- DE-A1- 4 433 031
- US-A1- 2004 114 925
- US-B1- 8 160 453

## Beschreibung

### Stand der Technik

Die Erfindung betrifft ein Verfahren zur effektiven Datenübertragung in einem optischen Telekommunikationsnetz im Wellenlängen-Multiplex-Betrieb einer Mehrzahl von verschiedenen optischen Wellenlängen, wobei das optische Telekommunikationsnetz eine Mehrzahl von Netzknoten aufweist, wobei jeweils zwei Netzknoten über eine optische Übertragungsstrecke miteinander verbunden sind, wobei die Datenübertragung auf der optischen Übertragungsstrecke filterlos für die Mehrzahl von optischen Wellenlängen erfolgt.

Die Erfindung betrifft ferner ein optisches Telekommunikationsnetz zur effektiven Datenübertragung in einem optischen Telekommunikationsnetz im Wellenlängen-Multiplex-Betrieb einer Mehrzahl von verschiedenen optischen Wellenlängen, wobei das optische Telekommunikationsnetz eine Mehrzahl von Netzknoten aufweist, wobei jeweils zwei Netzknoten über eine optische Übertragungsstrecke miteinander verbunden sind, wobei die Datenübertragung auf der optischen Übertragungsstrecke filterlos für die Mehrzahl von optischen Wellenlängen erfolgt.

Ferner betrifft die Erfindung auch die Verwendung eines Netzknotens in einem optischen Telekommunikationsnetz sowie ein Computerprogramm mit Programmcodemitteln und ein Computerprogrammprodukt mit einem computerlesbaren Medium und einem auf dem computerlesbaren Medium gespeicherten Computerprogramm, die dazu geeignet sind, alle Schritte des erfindungsgemäßen Verfahrens auszuführen.

Verfahren zur Übertragung von Daten unter Nutzung von Lichtwellenleitern, d.h. unter Nutzung von optischen Telekommunikationsnetzen, sind allgemein bekannt. Beispielsweise gilt für viele breitbandige Telekommunikationsnetze, dass der überwiegende Teil der zu übertragenden Daten über optische Datenübertragungssysteme bzw. optische Telekommunikationsnetze, insbesondere unter Nutzung von Lichtwellenleitern, übertragen wird. Einsatz finden solche optischen Telekommunikationsnetze beispielsweise bei Aggregationsnetzen. Solche Aggregationsnetze, beispielsweise für Privatkundenverkehr, haben die Aufgabe, Verkehr von Regionalknoten zu Backbone-Knoten zu führen.

Typischerweise beruhen heutige bzw. bisher implementierte kommerzielle Systeme auf Wellenlängen-Routing durch optische Filterelemente, d.h. es werden verschiedene (optische) Wellenlängen der Mehrzahl von gemäß dem WDM (Wavelength Division Multiplex)-Prinzip benutzten optischen Wellenlängen in selektiver Weise geroutet, wozu erforderlich ist, Wellenlängenfilter einzusetzen. Derzeit wird auf Glasfasergebundenen Weitverkehrsstrecken typischerweise Wellenlängenmultiplex (Wavelengt Division Multiplex, WDM) angewendet, wobei im ITU-T Standard G.694.1 hierzu Mittenfrequenzen im Abstand von 100GHz und 50GHz definiert werden. Obwohl die Datenraten pro Wellenlänge in den letzten Jahren immer größer wurden, konnten Verfahren entwickelt werden, die es erlauben, dass alle bisher kommerziell verfügbaren Datenraten in diese Frequenzraster passen. In aktuellen Transportsystemen werden beispielsweise bis zu 100Gbit/s durch einen WDM-Kanal mit der festen Breite von 50GHz über mehr als 1000km weit übertragen, um damit die Transportkapazität der Glasfaser möglichst gut auszunutzen. Die WDM-Kanäle selbst werden dabei entweder durch feste passive Filterstrukturen, sogenannte WDM-Multiplexer & -Demultiplexer, oder durch veränderbare, aktive Filter, sogenannte Wellenlängen-Selektive Switches (WSS), definiert. Normalerweise kommen somit in heute kommerziell verwendeter Technik optische Filter zum Einsatz, die für die einzelnen WDM-Kanäle klare wellenlängenabhängige Lichtpfade durch das Netz definieren. Üblicherweise werden die optischen Filter in sog. Rekonfigurierbaren Optischen Add/Drop Multiplexern (ROADMs) verbaut.

Neben solchen optischen Telekommunikationsnetzen, welche WDM-Pfade bzw. WDM-Kanäle zumindest auch mittels wellenlängenselektiver Filter definieren, sind ferner auch sogenannte filterlose optische Netze (FON) bekannt, die auf optische Filter zur Steuerung von WDM-Kanälen durch das Netz verzichten. Innerhalb von solchen filterlosen optischen Telekommunikationsnetzen ist es somit - zumindest im Prinzip - vorgesehen, dass sich jede Wellenlänge durch das gesamte angeschlossene Netz ausbreitet. Als Topologien, die für die Realisierung eines solchen filterlosen optischen Telekommunikationsnetzes typischerweise in Frage kommen, wurden folglich primär rein lineare Punkt-zu-Punkt-Strecken betrachtet (sogenannte point-to-point Strecken). Bei filterlosen optischen Telekommunikationsnetzen ergeben sich insbesondere die Vorteile,
-- dass keine teuren ROADMs (oder zumindest deutlich weniger) benötigt werden, sondern stattdessen vergleichsweise kostengünstige Splitter/Koppler-Lösungen Verwendung finden,
-- dass generell "farblose" Anschlüsse ("colorless ports") Verwendung finden, weil Splitter bzw. Koppler keine Wellenlängen-Diskriminierung aufweisen,
-- dass weniger planerischer Aufwand aufgrund einer vergleichsweise einfachen Wellenlängen-Zuordnung möglich ist und
-- dass ein vereinfachtes Netzmanagement möglich ist.

Diesen vorteilhaften Eigenschaften steht gegenüber, dass auf einer gegebenen optischen Übertragungsstrecke im Allgemeinen keine Wiederverwendung einer Wellenlänge möglich ist, die auf einem beliebigen Streckensegment im filterlosen optischen Telekommunikationsnetz einmalig verwendet wird, so dass eine (gegenüber der theoretisch möglichen Transportkapazität zwischen zwei beliebigen Punkten entlang der optischen Übertragungsstrecke) lediglich geringere Transportkapazität zur Verfügung steht (aufgrund des sogenannten "Drop-&-Waste"-Prinzips, gemäß dem eine an einem Zielknoten entlang der Übertragungsstrecke ausgekoppelte (Drop) Wellenlänge für die gesamte restliche Übertragungsstrecke aufgrund des Prinzips der filterlosen Netzarchitektur - und des damit einhergehenden Fehlens von wellenlängenblockierenden bzw. wellenlängenroutenden Netzelementen - nicht verwendbar (Waste) und damit für andere Verkehrsbeziehungen ausgeschlossen ist). Ferner ist bei filterlosen optischen Telekommunikationsnetzen zu beachten, dass sich ein betrachtetes WDM-Signal über mehrere Wege durch das Telekommunikationsnetz ausbreiten würde, sofern das optische Telekommunikationsnetz vermaschte Netztopologien aufweist, so dass es ohne weitere Maßnahmen zu Überlagerungen verschiedener, zeitlich versetzter Kopien desselben Signals kommen kann bzw. durch solche Interferenzen der Signalinhalt, wenn überhaupt, nur schwer detektierbar ist bzw. auch die Gefahr besteht, dass entsprechend vermaschte Netztopologien (bzw. im Extremfall auch das gesamte filterlose optische Telekommunikationsnetz) auf einigen Wellenlängen den Laser-Effekt zeigen und damit zu instabilen Oszillationen neigen. Für filterlose optische Telekommunikationsnetze ist es daher erforderlich, auf der Basis einer gegebenen Netztopologie (Knoten & mögliche Glasfaserstrecken) lineare optische Übertragungsstrecken, die im Folgenden auch als Faserbäume bezeichnet werden, zu betrachten. In einem solchen Faserbaum bzw. einer solchen optischen Übertragungsstrecke existieren per definitionem keine rückgekoppelten Faserstrukturen. Das heißt nicht, dass es z.B. keine dreieckförmige Faserführungen gibt (siehe Bild 2, links), die drei Knoten miteinander verbinden. In jedem Fall ist aber durch Endterminals garantiert, dass diese Fasern innerhalb der optischen Knoten keine Rückkopplung auf einen bereits verbundenen Teil des Faserbaums haben.

Zur Sicherstellung einer möglichst hohen Ausfallsicherheit eines optischen Telekommunikationsnetzes ist es üblich, dass der Fehlerfall des Ausfalls einer Glasfaserstrecke betrachtet wird, beispielsweise ausgelöst durch Faserbruch oder Verstärkerausfall. Damit fallen sämtliche Kanäle eines WDM-Spektrums auf dieser Glasfaserstrecke aus. Allerdings kann auf der photonischen bzw. optischen Ebene (Layer) ein Schutzverfahren auch besonders kosteneffizient implementiert werden, z.B. durch schnelle optische Umschalter.

Eine solche schnelle optische Umschaltung von Signalübertragungspfaden ist in einem optischen Telekommunikationsnetz, welches die einzelnen WDM-Kanäle selektiv zu routen in der Lage ist (welches also Signalpfade für einzelne WDM-Kanäle innerhalb eines typischerweise relativ stark vermaschten Telekommunikationsnetzes aufgrund der vorhandenen Filterung der unterschiedlichen WDM-Kanäle schalten kann) durch die Bereitstellung der oben angesprochenen Umschalter in der Regel mit einem geringeren Kapazitätsverlust und mit geringerer planerischer Komplexität möglich als bei einem filterlosen optischen Telekommunikationsnetz, weil in der Regel verschiedene Faserbäume innerhalb eines solchen Netzes gegenseitig die Ausfallsicherheit bereitstellen und dadurch eine Vielzahl von bei der Planung eines solchen Telekommunikationsnetzes zu berücksichtigenden Bedingungen gleichzeitig erfüllt sein müssen, mithin die verschiedenen Faserbäume des filterlosen optischen Telekommunikationsnetz aus der Perspektive der Realisierung einer möglichst hohen Ausfallsicherheit in hohem Maße voneinander abhängig sind. Dies erhöht maßgeblich die Komplexität hinsichtlich der Planung und des Betriebs eines solchen filterlosen optischen Telekommunikationsnetzes.

Die Patentschriften DE4433031A1, US2004114925 und DE10019814 offenbaren Verfahren zum Umschalten einer optischen Datenübertragungsleitung sowie Verfahren zur Überwachung des Betriebes von optischen Zuleitungsfasern innerhalb eines faseroptischen Kommunikationsnetzes.

### Offenbarung der Erfindung

Der Erfindung liegt die Aufgabe zugrunde, ein Verfahren und ein System bzw. ein filterloses optisches Telekommunikationsnetz zur Verfügung zu stellen, bei welchem eine hohe Ausfallsicherheit mit einer möglichst geringen Komplexität hinsichtlich zu erfüllender Bedingungen der verschiedenen, in dem filterlosen optischen Telekommunikationsnetz realisierten Faserbäume realisierbar ist, so dass bei ansonsten gleichen Bedingungen - insbesondere hinsichtlich des Investitionsbedarfs für die Komponenten des optischen Telekommunikationsnetzes - eine höhere Leistungsfähigkeit (im Sinn einer insgesamt höheren, nutzbaren Datentransportkapazität) möglich ist.

Diese Aufgabe wird erfindungsgemäß gelöst durch ein Verfahren zur effektiven Datenübertragung in einem optischen Telekommunikationsnetz im Wellenlängen-Multiplex-Betrieb (WDM, wavelength division multiplex) einer Mehrzahl von verschiedenen optischen Wellenlängen, wobei das optische Telekommunikationsnetz eine Mehrzahl von Netzknoten aufweist,
wobei jeweils ein Paar von Netzknoten aus der Mehrzahl von Netzknoten - umfassend einen ersten Netzknoten und einen zweiten Netzknoten - mittels wenigstens einer optischen Übertragungsstrecke zur Datenübertragung miteinander verbunden sind, wobei die wenigstens eine optische Übertragungsstrecke einen ersten Teilbereich und einen zweiten Teilbereich derart aufweist, dass der erste und zweite Netzknoten mittels des ersten Teilbereichs der wenigstens einen optischen Übertragungsstrecke miteinander verbunden sind und der erste und zweite Netzknoten unabhängig davon mittels des zweiten Teilbereichs der wenigstens einen optischen Übertragungsstrecke ebenfalls miteinander verbunden sind,
wobei die optische Übertragungsstrecke zur Datenübertragung in eine erste Richtung wenigstens eine erste optische Datenübertragungsleitung und zur Datenübertragung in eine der ersten Richtung entgegengesetzte zweite Richtung wenigstens eine zweite optische Datenübertragungsleitung aufweist, wobei die Datenübertragung sowohl auf der ersten optischen Datenübertragungsleitung als auch auf der zweiten optischen Datenübertragungsleitung filterlos für die Mehrzahl von optischen Wellenlängen erfolgt, wobei der erste Teilbereich der wenigstens einen optischen Übertragungsstrecke den ersten und zweiten Netzknoten zur Datenübertragung sowohl in der Richtung vom ersten Netzknoten zum zweiten Netzknoten - mittels der ersten optischen Datenübertragungsleitung - als auch in der Richtung vom zweiten Netzknoten zum ersten Netzknoten - mittels der zweiten optischen Datenübertragungsleitung - verbindet, wobei der zweite Teilbereich der wenigstens einen optischen Übertragungsstrecke den ersten und zweiten Netzknoten zur Datenübertragung sowohl in der Richtung vom zweiten Netzknoten zum ersten Netzknoten - mittels der ersten optischen Datenübertragungsleitung - als auch in der Richtung vom ersten Netzknoten zum zweiten Netzknoten - mittels der zweiten optischen Datenübertragungsleitung - verbindet,
wobei sich sowohl im ersten als auch im zweiten Teilbereich die erste Datenübertragungsleitung und die zweite Datenübertragungsleitung jeweils zu der optischen Übertragungsstrecke ergänzen, wobei das Verfahren die folgenden Schritte umfasst:
-- zur Datenübertragung vom ersten Netzknoten zum zweiten Netzknoten wird - am Ort des ersten Netzknotens - ein optisches Signal einer ersten Wellenlänge in die erste Datenübertragungsleitung und in die zweite Datenübertragungsleitung eingekoppelt und das optische Signal der ersten Wellenlänge - am Ort des zweiten Netzknotens aus wenigstens einer der ersten und zweiten Datenübertragungsleitung ausgekoppelt und
-- zur Datenübertragung vom zweiten Netzknoten zum ersten Netzknoten wird - am Ort des zweiten Netzknotens - ein optisches Signal einer von der ersten Wellenlänge unterschiedlichen zweiten Wellenlänge in die erste Datenübertragungsleitung und in die zweite Datenübertragungsleitung eingekoppelt und das optische Signal der zweiten Wellenlänge - am Ort des ersten Netzknotens aus wenigstens einer der ersten und zweiten Datenübertragungsleitung ausgekoppelt.

Es ist dadurch gemäß der vorliegenden Erfindung in vorteilhafter Weise möglich, dass sowohl das Normalfall-Signal (d.h. das ohne eine fehlerhafte Beeinträchtigung des optischen Telekommunikationsnetzes von der jeweiligen Empfängerstation bzw. dem Empfängerknoten ausgewertete Signal) als auch das Fehlerfall-Signal (d.h. das bei einer fehlerhaften Beeinträchtigung des optischen Telekommunikationsnetzes von der jeweiligen Empfängerstation bzw. dem Empfängerknoten ausgewertete Signal) unter Verwendung derselben optischen Übertragungsstrecke bzw. unter Verwendung desselben optischen Faserbaums übertragen wird. Hierdurch ist es erfindungsgemäß - und trotz Beibehaltung des gleichen Grades an Ausfallsicherheit innerhalb des filterlosen optischen Telekommunikationsnetzes - nicht notwendig, aus Gründen der Ausfallsicherheit zwei Faserbäume bzw. zwei optische Übertragungsstrecken derart vorzusehen, dass diese sich gegenseitig schützen bzw. dass zumindest der eine Faserbaum (bzw. die eine optische Übertragungsstrecke) den anderen Faserbaum (bzw. die andere optische Übertragungsstrecke) schützt.

Erfindungsgemäß ist es zur effektiven Datenübertragung in einem eine Mehrzahl von Netzknoten aufweisenden filterlosen optischen Telekommunikationsnetz vorgesehen, dass jeweils zwei der Netzknoten (d.h. ein Paar von Netzknoten aus der Mehrzahl von Netzknoten) mittels einer optischen Übertragungsstrecke (bzw. mittels eines Faserbaums) miteinander verbunden sind, wobei die optische Übertragungsstrecke einen ersten Teilbereich und einen zweiten Teilbereich derart aufweist, dass die zwei betrachteten Netzknoten mittels des ersten Teilbereichs miteinander verbunden sind und ferner auch - und zwar unabhängig von der Verbindung über den ersten Teilbereich - mittels des zweiten Teilbereichs miteinander verbunden sind. Die optische Übertragungsstrecke weist zur Datenübertragung in eine erste Richtung (der optischen Übertragungsstrecke) wenigstens eine erste optische Datenübertragungsleitung und zur Datenübertragung in eine der ersten Richtung entgegengesetzte zweite Richtung (der optischen Übertragungsstrecke) wenigstens eine zweite optische Datenübertragungsleitung auf. Die Datenübertragung erfolgt sowohl auf der ersten optischen Datenübertragungsleitung als auch auf der zweiten optischen Datenübertragungsleitung filterlos für die Mehrzahl von optischen Wellenlängen und sowohl die erste als auch die zweite Datenübertragungsleitung ergänzen sich sowohl im ersten als auch im zweiten Teilbereich jeweils zu der gesamten optischen Übertragungsstrecke. Der erste Teilbereich verbindet den ersten und zweiten Netzknoten zur Datenübertragung sowohl in der Richtung vom ersten Netzknoten zum zweiten Netzknoten - mittels der ersten optischen Datenübertragungsleitung - als auch in der Richtung vom zweiten Netzknoten zum ersten Netzknoten - mittels der zweiten optischen Datenübertragungsleitung. Ferner verbindet der zweite Teilbereich den ersten und zweiten Netzknoten zur Datenübertragung sowohl in der Richtung vom zweiten Netzknoten zum ersten Netzknoten - mittels der ersten optischen Datenübertragungsleitung - als auch in der Richtung vom ersten Netzknoten zum zweiten Netzknoten - mittels der zweiten optischen Datenübertragungsleitung. Das erfindungsgemäße Verfahren umfasst dabei die folgenden Schritte:
-- zur Datenübertragung vom ersten Netzknoten zum zweiten Netzknoten wird - am Ort des ersten Netzknotens - ein optisches Signal einer ersten Wellenlänge in die erste filterlose Datenübertragungsleitung und in die zweite filterlose Datenübertragungsleitung eingekoppelt und das optische Signal der ersten Wellenlänge - am Ort des zweiten Netzknotens aus wenigstens einer der ersten und zweiten Datenübertragungsleitung ausgekoppelt und
-- zur Datenübertragung vom zweiten Netzknoten zum ersten Netzknoten wird - am Ort des zweiten Netzknotens - ein optisches Signal einer von der ersten Wellenlänge unterschiedlichen zweiten Wellenlänge in die erste filterlose Datenübertragungsleitung und in die zweite filterlose Datenübertragungsleitung eingekoppelt und das optische Signal der zweiten Wellenlänge - am Ort des ersten Netzknotens aus wenigstens einer der ersten und zweiten Datenübertragungsleitung ausgekoppelt.

Hierdurch wird erfindungsgemäß immer sichergestellt, dass beginnend mit der Signalerzeugung (im ersten Netzknoten für die Übertragung zum zweiten Netzknoten bzw. im zweiten Netzknoten für die Übertragung zum ersten Netzknoten) der Fehlerfall eines Ausfalls eines gesamten Verbindungsstrangs zwischen den beiden betrachteten Netzknoten berücksichtigt ist und sogar bereits das Ersatzsignal (ständig und dauerhaft) in den jeweils anderen (d.h. nicht ausgefallenen) Teilbereich der Übertragungsstrecke zur Verwendung beim Empfangsnetzknoten (zweiter bzw. erster Netzknoten) eingekoppelt wird.

Im Kontext der vorliegenden Erfindung ist unter einem filterlosen optischen Telekommunikationsnetz zu verstehen, dass die Datenübertragung filterlos für die Mehrzahl von optischen Wellenlängen (innerhalb eines Faserbaums bzw. einer optischen Übertragungsstrecke) erfolgt, also ohne besondere Methoden/Bauelemente, die zur Blockierung oder massiven Dämpfung einzelner Wellenlängen auf dem dem Terminierungsknoten bzw. Empfängernetzknoten (d.h. für den das Signal bestimmt ist) folgenden Glasfaserabschnitt dienen. Auch sogenannte filterlose optische Telekommunikationsnetze müssen nicht völlig ohne Filterung von einzelnen Wellenlängen sein. Beispielsweise mag eine Wellenlänge auch in einem filterlosen optischen Telekommunikationsnetz geringfügig im Pegel angepasst werden (was natürlich strenggenommen einer Filterung entsprechen würde), jedoch handelt es sich hierbei um eine Pegelanpassung, nicht um eine Filterung im Sinne der Definition von unterschiedlichen Routen für bestimmte optische Wellenlängen. Im Kontext der vorliegenden Erfindung ist es vorgesehen, dass eine bestimmte optische Wellenlänge (der Mehrzahl von Wellenlängen bzw. optischen Frequenzen) lediglich an einer einzigen Stelle bzw. einem einzigen Knoten (innerhalb eines Faserbaums bzw. einer optischen Übertragungsstrecke) eingespeist wird, was auch als sogenanntes "drop and waste"-Prinzip bezeichnet wird, d.h. eine optische Wellenlänge wird ggf. lediglich auf einem kleinen Teilbereich des Faserbaums bzw. der optischen Übertragungsstrecke operativ genutzt, kann aber im restlichen Teil des Faserbaums bzw. der optischen Übertragungsstrecke nicht genutzt werden (d.h. die Übertragungskapazität einer solchen Wellenlänge wird im restlichen Teil des Faserbaums bzw. der optischen Übertragungsstrecke nicht genutzt).

Wie bereits erwähnt wurde, ist das dominierende Fehlermuster in einem Transportnetz der Ausfall einer Glasfaserstrecke z.B. durch Faserbruch oder Verstärkerausfall. Damit fallen sämtliche Kanäle eines WDM-Spektrums auf dieser Glasfaserstrecke aus. Allerdings kann auf dem photonischen Layer ein Schutzverfahren auch besonders kosteneffizient implementiert werden, z.B. durch schnelle optische Umschalter. Es werden dann im Fehlerfall die weiterhin funktionierenden elektrisch-optischen Schnittstellen, auch als Transceiver (bzw. Sendeempfänger) bezeichnet, weiterverwendet, d.h. deren Verkehrslast über optische Ersatzwege wieder hergestellt. Hierdurch werden bis zu 50% der Schnittstellen bzw. Sendeempfänger eingespart, denn das Schutzkonzept basiert gerade nicht darauf, dass die kostentreibenden Schnittstellen bzw. Sendeempfänger selbst gedoppelt werden. Generell liegen nämlich die Kostenanteile für diese Schnittstellen bzw. Sendeempfänger bei einem hinreichend gefüllten Netz bei deutlich über 80% der gesamten Netzkosten. Durch Multi-Layer Resilience können also ca. 40% der Gesamtkosten eines Netzes (sowohl auf dem photonischen als auch auf dem Paket-Layer) reduziert werden. Einer der beiden Optionen für optische Resilience ist die optische Protection, bei dem ein WDM-Kanal - erzeugt mit nur einem einzigen elektrisch-optischen Interface - sendeseitig auf zwei disjunkte optische Wege aufgeteilt wird. Die sendeseitige Signaldopplung kann besonders vorteilhaft mit einfachen optischen Splittern geschehen. Werden beide "Repliken" über verschiedene Wege zum Empfangsknoten geschickt (jeweils geführt durch optische Filter), kann dieser sich das bessere (im Normalfall) bzw. das überlebende Signal (im Fehlerfall) mit Hilfe eines schnellen optischen Schalters zur Detektion auswählen. Neben der Kostenreduktion dieses Schutzkonzepts ergeben sich daher auch die Vorteile:
-- Sofern der Schutz auf der optischen Ebene schnell genug greift, kann auf entsprechend schnelle IP-Schutzverfahren verzichtet werden, z.B. auf Fast-ReRoute (FRR); aus diesem Grund muss auf die schnelle Reaktion der optischen Schalter sowie eine kurze Synchronisierungszeit der Transceiver auf das überlebende Signal geachtet werden;
-- Weniger Aufwand für eine Kommunikation über die beteiligten Ebenen hinweg, d.h. zwischen Paket-Schicht und photonischer Schicht. Die damit einhergehende optische Absicherung kann prinzipiell autark getriggert werden, ohne dass sich eine Control Ebener der photonischen Schicht mit der Router-Schicht (d.h. der IP-Paket-Schicht) abstimmen muss. Nur im Falle, dass ein optischer Schutz nicht greift, z.B. durch Ausfall eines Sendeempfängers, kommen Schutzverfahren auf der IP-Paket-Schicht ins Spiel. Aufgrund der genannten Vorteile, wird daher erfindungsgemäß auch ein Schutz auf der optischen Ebene für sinnvoll ausgewählte Faserbäume eines filterlosen optischen Telekommunikationsnetzes angestrebt, wobei jedoch die obige Beschreibung eines Schichten-übergreifenden Schutzkonzepts implizit von einem filterbehafteten Ansatz des optischen Telekommunikationsnetzes ausgeht. Da im Fall von filterlosen optischen Telekommunikationsnetzen auf Filter zur Pfadsteuerung völlig oder zumindest weitgehend verzichtet wird, würde eine Lösung innerhalb eines filterlosen optischen Telekommunikationsnetzes darin bestehen, dass in einem ausgedehnteren, vermaschten Netz (in welchem in der Regel immer ein Ensemble von sinnvoll ausgewählten Faserbäumen existiert bzw. vorgesehen ist und in welchem Faserbäume in der Regel immer bidirektional ausgelegt sind (d.h. ein Faserbaum umfasst ein Faserpaar, wobei jede Faser des Faserpaars in nur einer Richtung betrieben wird), so dass die Faserbäume in einfacher Weise die beiden Richtungen der Verkehrsflüsse zwischen den jeweiligen Knotenpaaren unterstützen, wobei aufgrund der Bidirektionalität der Flüsse die beiden Verbindungen (Hin- und Rückrichtung) eine Wellenlänge einen Faserbaum immer so belegt, dass keine weitere bidirektionale Verbindung in demselben Baum auf einer bereits verwendeten Wellenlänge mehr möglich ist, also auch keine Backup-Verbindung; andernfalls käme es innerhalb des Faserbaumes (auf dem Streckenabschnitt zwischen den beiden Knotenpaaren) zu einer destruktiven Interferenz der beiden bidirektionalen Lichtpfade.) das Normalfall-Signal und das Fehlerfall-Signal in zwei unterschiedliche Faserbäume eingekoppelt wird.

Somit müssen - aufgrund der Tatsache, dass eine bestimmte Wellenlänge bidirektional nur ein einziges Mal in einen bidirektionalen Faserbaum eingekoppelt werden kann -, mit Blick auf einen kostengünstigen optischen Schutz innerhalb des Telekommunikationsnetzes die beiden Kopien eines WDM-Signals in zwei unterschiedliche Faserbäume eingekoppelt werden, was hier als Inter-Tree Protection (IrTP) bezeichnet sei.

Realisiert wird dieses Konzept wieder auf der Sendeseite mit passiven Signalsplittern, die die Signalkopien in zwei Bäume aus dem bestehenden Ensemble einkoppeln. In diesen beiden Bäumen des Ensembles wird das Spektrum bei der ausgewählten Wellenlänge vollständig "verbraucht", da keine optischen Filter den Signalfluss in alle angeschlossenen Zweige verhindern. Empfangsseitig erlauben schnelle optische Schalter erneut einen optischen Schutz.

Eine notwendige Voraussetzung für Inter-Tree Protection ist es, dass die sich gegenseitig schützenden Lichtpfade in unterschiedlichen, d.h. disjunkten, Faserbäumen geführt werden, was jedoch bei der Planung eines filterlosen optischen Telekommunikationsnetzes - basierend auf einem Ensemble mehrerer Faserbäume - zu gravierenden Einschränkungen (insbesondere falls ausschließlich Inter-Tree Protection zugelassen wird) als auch zu einer größeren Anzahl von Faserbäumen im filterlosen optischen Telekommunikationsnetz führt, was besonders bei noch geringen Verkehrsmengen bzw. wenig belasteten Netzen unweigerlich zu einem größeren Faserverbrauch und mehr kostentreibenden Netzkomponenten führt. Eine "build-as-yougrow" Strategie zum sukzessiven Netzaufbau ist somit schwieriger umsetzbar; jedoch kann leichter die gängige bzw. vorherrschende Sendeempfänger-Technologie verwendet werden, die - insbesondere aus Kostengründen - auf einer Single-Laser-Transceiver-Lösung (Einzel-Laser-Sendeempfänger-Lösung) aufbaut und in dem kohärenten Transceiver einen einzigen Laser verwendet, dessen optische Leistung auf die Sende- und Empfangsrichtung sinnvoll geteilt wird, wodurch es zu einer Verkopplung der Wellenlängen für Hin- und Rückrichtung kommt.Mit einer Single-Laser-Transceiver-Lösung können die Wellenlängen für Working- und Backup-Signal nicht unterschiedlich gewählt werden, da die Signalkopien durch optische Splitter extrem kostengünstig erzeugt werden.

Zusammenfassend kann somit gesagt werden, dass ein optisches Schutzkonzept bei der Verwendung von derzeit gängigen Single-Laser Transceivern nur funktioniert, wenn es sich über zwei optisch und topologisch unabhängige Bäume erstreckt, d.h. Inter-Tree Protection. Bei einer Netzdimensionierung, die alle Verkehrsbedarfe erfüllt, werden damit insgesamt deutlich mehr Faserbäume für ein gegebenes Telekommunikationsnetz bzw. ein Telekommunikationsnetz einer bestimmten Leistungsfähigkeit benötigt.

Gemäß der vorliegenden Erfindung wird vorgeschlagen ein Schutzkonzept unter Verwendung von Intra-Tree-Protection innerhalb eines gegebenen bzw. zu planenden Telekommunikationsnetzes zu realisieren.

Hierdurch ist es erfindungsgemäß in vorteilhafter Weise möglich, dass ein schichtenübergreifender (Layer-übergreifender) Schutz auf sowohl der optischen Ebene (bzw. optischen Schicht) als auch auf der Internet Protokoll-Ebene (bzw. Internet Protokoll-Schicht) hohe Kosteneinsparungen erlaubt.

Erfindungsgemäß ist es vorgesehen, dass die Sendefrequenz (oder Sendewellenlänge) eines Netzknotens sich von der Empfangsfrequenz (oder Empfangswellenlänge) des Netzknotens unterscheidet. Zur Realisierung dessen ist es erfindungsgemäß bevorzugt vorgesehen, dass der erste Netzknoten und der zweite Netzknoten jeweils einen optischen Zwei-Laser-Sendeempfänger (Dual-Laser-Transceiver) aufweisen, wobei mittels eines ersten Lasers des Zwei-Laser-Sendeempfängers die erste Wellenlänge und mittels eines zweiten Lasers des Zwei-Laser-Sendeempfängers die zweite Wellenlänge generiert wird.

Hierdurch ist es erfindungsgemäß in vorteilhafter Weise möglich, dass die Sendefrequenz und die Empfangsfrequenz (bzw. die Sendewellenlänge und die Empfangswellenlänge) am Netzknoten unterschiedlich sind.

Dadurch, dass sich die Sendefrequenz und die Empfangsfrequenz eines Netzknotens unterscheiden (dürfen), kann dann die Forderung, dass sich die beiden Schutzpfade über zwei disjunkte Bäume erstrecken müssen, aufgehoben werden. Ein und derselbe Baum kann jetzt jeweils geschützte Verkehre in Hin- und Rückrichtung aufnehmen. Dieses Schutzverfahren wird im Rahmen der vorliegenden Erfindung und im Zusammenhang von filterlosen optischen Telekommunikationsnetzen als Intra-Tree Protection (laTP) bezeichnet. Dual-Laser Transceiver weisen ferner den Vorteil auf, dass sowohl für das Sende- als auch das Empfangsmodul hinreichend hohe Leistungspegel verfügbar sind. Auf spezielle optische Nachverstärkung des Sendesignals im Transceiver kann ggfs. somit verzichtet werden. Diese optische Nachverstärkung ist in Netzen ohne weitere optische Filter besonders nachteilig, da jede Verstärkung quantenmechanisch mit einem breitbandigen Rauschprozess verbunden ist. Ohne einzelne Kanalfilter kommt es zu einer massiven Rauschaddition über alle Kanäle. Die Systemreichweite wird entsprechend eingeschränkt.

Erfindungsgemäß ist es bevorzugt vorgesehen, dass
-- in einem Normalbetriebsmodus der optischen Übertragungsstrecke am Ort des zweiten Netzknotens das aus der ersten Datenübertragungsleitung ausgekoppelte optische Signal der ersten Wellenlänge und/oder am Ort des ersten Netzknotens das aus der zweiten Datenübertragungsleitung ausgekoppelte optische Signal der zweiten Wellenlänge verwendet wird und
-- in einem Fehlerfallbetriebsmodus der optischen Übertragungsstrecke am Ort des zweiten Netzknotens das aus der zweiten Datenübertragungsleitung ausgekoppelte optische Signal der ersten Wellenlänge und/oder am Ort des ersten Netzknotens das aus der ersten Datenübertragungsleitung ausgekoppelte optische Signal der zweiten Wellenlänge verwendet wird.

Hierdurch ist es erfindungsgemäß in vorteilhafter Weise möglich, dass zusätzlich zur Übertragung des Nutz-Signals (im Normalbetriebsmodus) das Backup-Signal (zur Verwendung im Fehlerfallbetriebsmodus) immer generiert und übertragen wird, so dass wiederum eine möglichst kurze Umschaltzeit im Falle eines Fehlers realisiert werden kann.

Ferner ist es erfindungsgemäß bevorzugt vorgesehen, dass zwischen dem Normalbetriebsmodus und dem Fehlerfallbetriebsmodus innerhalb eines Zeitintervalls nach Eintreten des Fehlerfalls umgeschaltet wird, wobei das Zeitintervall kleiner als bis maximal gleich 100 Millisekunden, bevorzugt kleiner als bis maximal gleich 50 Millisekunden, besonders bevorzugt kleiner als bis maximal gleich 30 Millisekunden, ist.

Hierdurch ist es erfindungsgemäß in vorteilhafter Weise möglich, dass die Heilung eines Fehlerzustand der optischen Übertragungsstrecke auf der optischen Schicht erfolgen kann, so dass ein solcher Fehlerfall nicht zwingend Auswirkungen auf die Internet Protokoll-Schicht haben muss.

Erfindungsgemäß ist es ferner bevorzugt vorgesehen, dass der erste und zweite Netzknoten übergeordnete Netzknoten des optischen Telekommunikationsnetzes sind, wobei das optische Telekommunikationsnetz neben den Netzknoten eine Mehrzahl von Netzelementen aufweist.

Hierdurch ist es erfindungsgemäß in vorteilhafter Weise möglich, dass das erfindungsgemäße Schutzkonzept innerhalb eines Backbone-Netzes Verwendung findet. Typischerweise sind die Netzknoten innerhalb eines Backbone-Netzes weitgehend gleichberechtigt (jedenfalls nicht in der Art der Über- bzw. Unterordnung der Netzknoten innerhalb eines Aggregationsnetzes nachgeordnet).

Erfindungsgemäß ist es ferner bevorzugt vorgesehen, dass der erste Netzknoten ein übergeordneter Netzknoten des optischen Telekommunikationsnetzes ist und der zweite Netzknoten ein Netzelement ist.

Hierdurch ist es erfindungsgemäß in vorteilhafter Weise möglich, dass das erfindungsgemäße Schutzkonzept auch innerhalb eines Aggregations-Netzes und/oder innerhalb eines Zugangsnetzes Verwendung finden kann.

Ein weiterer Gegenstand der vorliegenden Erfindung ist ein optisches Telekommunikationsnetz zur effektiven Datenübertragung in einem optischen Telekommunikationsnetz im Wellenlängen-Multiplex-Betrieb (WDM, wavelength division multiplex) einer Mehrzahl von verschiedenen optischen Wellenlängen, wobei das optische Telekommunikationsnetz eine Mehrzahl von Netzknoten aufweist,
wobei jeweils ein Paar von Netzknoten aus der Mehrzahl von Netzknoten - umfassend einen ersten Netzknoten und einen zweiten Netzknoten - mittels wenigstens einer optischen Übertragungsstrecke zur Datenübertragung miteinander verbunden sind, wobei die wenigstens eine optische Übertragungsstrecke einen ersten Teilbereich und einen zweiten Teilbereich derart aufweist, dass der erste und zweite Netzknoten mittels des ersten Teilbereichs der wenigstens einen optischen Übertragungsstrecke miteinander verbunden sind und der erste und zweite Netzknoten unabhängig davon mittels des zweiten Teilbereichs der wenigstens einen optischen Übertragungsstrecke ebenfalls miteinander verbunden sind,
wobei die optische Übertragungsstrecke zur Datenübertragung in eine erste Richtung wenigstens eine erste optische Datenübertragungsleitung und zur Datenübertragung in eine der ersten Richtung entgegengesetzte zweite Richtung wenigstens eine zweite optische Datenübertragungsleitung aufweist, wobei das optische Telekommunikationsnetz derart konfiguriert ist, dass die Datenübertragung sowohl auf der ersten optischen Datenübertragungsleitung als auch auf der zweiten optischen Datenübertragungsleitung filterlos für die Mehrzahl von optischen Wellenlängen erfolgt, wobei der erste Teilbereich der wenigstens einen optischen Übertragungsstrecke den ersten und zweiten Netzknoten zur Datenübertragung sowohl in der Richtung vom ersten Netzknoten zum zweiten Netzknoten - mittels der ersten optischen Datenübertragungsleitung - als auch in der Richtung vom zweiten Netzknoten zum ersten Netzknoten - mittels der zweiten optischen Datenübertragungsleitung - verbindet, wobei der zweite Teilbereich der wenigstens einen optischen Übertragungsstrecke den ersten und zweiten Netzknoten zur Datenübertragung sowohl in der Richtung vom zweiten Netzknoten zum ersten Netzknoten - mittels der ersten optischen Datenübertragungsleitung - als auch in der Richtung vom ersten Netzknoten zum zweiten Netzknoten - mittels der zweiten optischen Datenübertragungsleitung - verbindet,
wobei sich im ersten und zweiten Teilbereich sowohl die erste Datenübertragungsleitung als auch die zweite Datenübertragungsleitung jeweils zu der optischen Übertragungsstrecke ergänzt, wobei das optische Telekommunikationsnetz derart konfiguriert ist, dass:
-- zur Datenübertragung vom ersten Netzknoten zum zweiten Netzknoten - am Ort des ersten Netzknotens - ein optisches Signal einer ersten Wellenlänge in die erste Datenübertragungsleitung und in die zweite Datenübertragungsleitung eingekoppelt und das optische Signal der ersten Wellenlänge - am Ort des zweiten Netzknotens aus wenigstens einer der ersten und zweiten Datenübertragungsleitung ausgekoppelt wird und
-- zur Datenübertragung vom zweiten Netzknoten zum ersten Netzknoten - am Ort des zweiten Netzknotens - ein optisches Signal einer von der ersten Wellenlänge unterschiedlichen zweiten Wellenlänge in die erste Datenübertragungsleitung und in die zweite Datenübertragungsleitung eingekoppelt das optische Signal der zweiten Wellenlänge - am Ort des ersten Netzknotens aus wenigstens einer der ersten und zweiten Datenübertragungsleitung ausgekoppelt wird.

Es ist hierdurch erfindungsgemäß - auch mit Bezug auf das optische Telekommunikationsnetz - vorteilhaft möglich, dass sowohl das Normalfall-Signal (d.h. das ohne eine fehlerhafte Beeinträchtigung des optischen Telekommunikationsnetzes von der jeweiligen Empfängerstation bzw. dem Empfängerknoten ausgewertete Signal) als auch das Fehlerfall-Signal (d.h. das bei einer fehlerhaften Beeinträchtigung des optischen Telekommunikationsnetzes von der jeweiligen Empfängerstation bzw. dem Empfängerknoten ausgewertete Signal) unter Verwendung desselben optischen Faserbaums übertragen wird.

Ferner ist es erfindungsgemäß - auch mit Bezug auf das optische Telekommunikationsnetz - bevorzugt vorgesehen, dass das optische Telekommunikationsnetz derart konfiguriert ist, dass
-- in einem Normalbetriebsmodus der optischen Übertragungsstrecke am Ort des zweiten Netzknotens das aus der ersten Datenübertragungsleitung ausgekoppelte optische Signal der ersten Wellenlänge und/oder am Ort des ersten Netzknotens das aus der zweiten Datenübertragungsleitung ausgekoppelte optische Signal der zweiten Wellenlänge verwendet wird und
-- in einem Fehlerfallbetriebsmodus der optischen Übertragungsstrecke am Ort des zweiten Netzknotens das aus der zweiten Datenübertragungsleitung ausgekoppelte optische Signal der ersten Wellenlänge und/oder am Ort des ersten Netzknotens das aus der ersten Datenübertragungsleitung ausgekoppelte optische Signal der zweiten Wellenlänge verwendet wird.

Hierdurch ist es erfindungsgemäß vorteilhaft möglich, dass zusätzlich zur Übertragung des Nutz-Signals (im Normalbetriebsmodus) das Backup-Signal (zur Verwendung im Fehlerfallbetriebsmodus) immer generiert und übertragen wird, so dass wiederum eine möglichst kurze Umschaltzeit im Falle eines Fehlers realisiert werden kann.

Ferner ist es erfindungsgemäß - auch mit Bezug auf das optische Telekommunikationsnetz - bevorzugt, dass der erste und zweite Netzknoten übergeordnete Netzknoten des optischen Telekommunikationsnetzes sind, wobei das optische Telekommunikationsnetz daneben eine Mehrzahl von Netzelementen aufweist.

Ferner ist es erfindungsgemäß - auch mit Bezug auf das optische Telekommunikationsnetz - bevorzugt, dass der erste Netzknoten ein übergeordneter Netzknoten des optischen Telekommunikationsnetzes ist und der zweite Netzknoten ein Netzelement ist.

Ferner ist es erfindungsgemäß - auch mit Bezug auf das optische Telekommunikationsnetz - bevorzugt, dass der erste Netzknoten und der zweite Netzknoten jeweils einen optischen Zwei-Laser-Sendeempfänger (Dual-Laser-Transceiver) aufweisen, wobei der mittels eines ersten Lasers des Zwei-Laser-Sendeempfängers die erste Wellenlänge und mittels eines zweiten Lasers des Zwei-Laser-Sendeempfängers die zweite Wellenlänge generiert wird.

Weiterhin bezieht sich die vorliegende Erfindung auch auf die Verwendung eines Netzknotens in einem optischen Telekommunikationsnetz gemäß der vorliegenden Erfindung, wobei der Netzknoten einen optischen Zwei-Laser-Sendeempfänger (Dual-Laser-Transceiver) aufweist und wobei der Netzknoten ein übergeordneter Netzknoten oder ein Netzelement des optischen Telekommunikationsnetzes ist.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder einem Netzknoten ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder Netzknoten ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines beispielhaften optischen Telekommunikationsnetzes bzw. einer optischen Übertragungsstrecke mit einem ersten, einem zweiten und einem dritten Netzknoten.
- **Figuren 2 und 3**: zeigen eine schematische Ansicht eines beispielhaften optischen Telekommunikationsnetzes bzw. einer optischen Übertragungsstrecke mit einem ersten, einem zweiten, einem dritten und einem vierten Netzknoten.
- **Figur 4**: zeigt eine schematische Ansicht eines beispielhaften optischen Telekommunikationsnetzes bzw. einer optischen Übertragungsstrecke mit einem ersten und einem zweiten Netzknoten, wobei der erste Netzknoten ein übergeordneter Netzknoten ist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

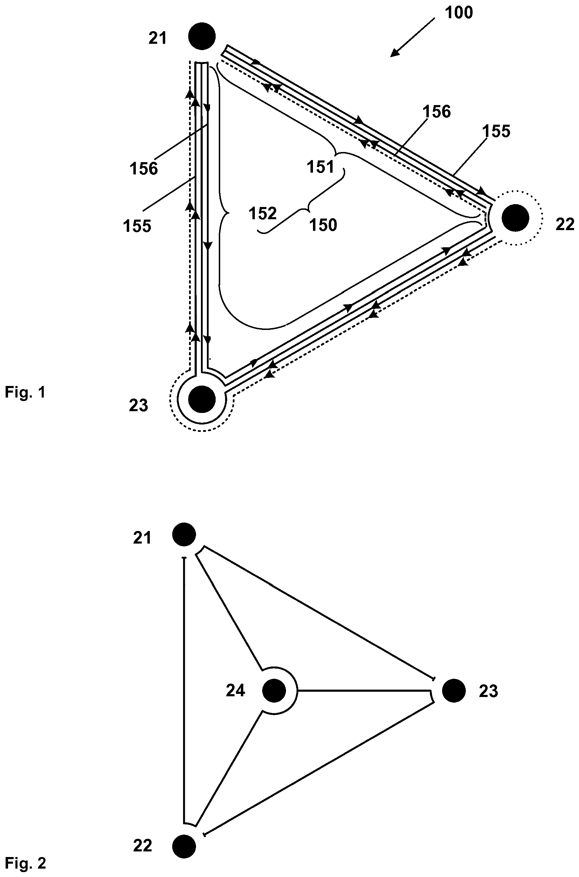

In Figur 1 ist eine Ansicht eines beispielhaften optischen Telekommunikationsnetzes 100 bzw. einer optischen Übertragungsstrecke 150 mit einem ersten Netzknoten 21, einem zweiten Netzknoten 22 und einem dritten Netzknoten 23 schematisch dargestellt. Im in Figur 1 dargestellten Beispiel weist das Telekommunikationsnetz 100 der Einfachheit halber lediglich eine einzige optische Übertragungsstrecke 150 (bzw. einen Faserbaum) auf, was bei einem realen Telekommunikationsnetz 100 typischerweise nicht zutrifft; in einem solchen realen Telekommunikationsnetz 100 sind in der Regel eine Vielzahl verschiedener optischer Übertragungsstrecken 150, in der Regel teilweise zwischen gleichen Netzknoten 21, 22, 23 und teilweise zwischen unterschiedlichen Netzknoten 21, 22, 23 vorhanden. Die optische Übertragungsstrecke 150 verläuft vom ersten Netzknoten 21 zum zweiten Netzknoten 22, vom zweiten Netzknoten zum dritten Netzknoten 23 und vom dritten Netzknoten 23 wieder zum ersten Netzknoten 21. Die optische Übertragungsstrecke ist im dargestellten Beispiel beim ersten Netzknoten unterbrochen (d.h. nicht ringförmig geschlossen); dies könnte jedoch in gleicher Weise auch beim zweiten oder dritten Netzknoten 22, 23 der Fall sein. Aus der Mehrzahl von Netzknoten 21, 22, 23 wird im Beispiel der Figur 1 das Paar des ersten Netzknotens 21 und des zweiten Netzknotens 22 betrachtet: Hinsichtlich der Verbindung zwischen diesen beiden Netzknoten 21, 22 kann die optische Übertragungsstrecke 150 als unterteilt gedacht sein in einen ersten Teilbereich 151 und einen zweiten Teilbereich 152; der ersten Teilbereich 151 entspricht der direkten Verbindung zwischen dem ersten und zweiten Netzknoten, während der zweite Teilbereich 152 der Verbindung dieser beiden Netzknoten 21, 22 über den dritten Netzknoten 23 entspricht. Das Paar des ersten und zweiten Netzknotens 21, 22 ist somit mittels des ersten Teilbereichs 151 miteinander verbunden und unabhängig davon auch mittels des zweiten Teilbereichs 152 miteinander verbunden. Die optische Übertragungsstrecke 150 weist zur Datenübertragung in eine erste Richtung (in der Darstellung gemäß Figur 1 entspricht dies dem Uhrzeigersinn) wenigstens eine erste optische Datenübertragungsleitung 155 und zur Datenübertragung in eine der ersten Richtung entgegengesetzte zweite Richtung (in der Darstellung gemäß Figur 1 entspricht dies dem Gegenuhrzeigersinn) wenigstens eine zweite optische Datenübertragungsleitung 156 aufweist. Die Datenübertragung erfolgt sowohl auf der ersten optischen Datenübertragungsleitung 155 als auch auf der zweiten optischen Datenübertragungsleitung 156 filterlos für die Mehrzahl von optischen Wellenlängen, die über die optische Übertragungsstrecke übertragen werden.

Der erste Teilbereich 151 verbindet somit den ersten und zweiten Netzknoten 21, 22 zur Datenübertragung sowohl in der Richtung vom ersten Netzknoten 21 zum zweiten Netzknoten 22 - nämlich mittels der ersten optischen Datenübertragungsleitung 155 - als auch in der Richtung vom zweiten Netzknoten 22 zum ersten Netzknoten 21 - nämlich mittels der zweiten optischen Datenübertragungsleitung 156. Entsprechend verbindet der zweite Teilbereich 152 den ersten und zweiten Netzknoten 21, 22 zur Datenübertragung sowohl in der Richtung vom zweiten Netzknoten 22 zum ersten Netzknoten 21 - mittels der ersten optischen Datenübertragungsleitung 155 - als auch in der Richtung vom ersten Netzknoten 21 zum zweiten Netzknoten 22 - mittels der zweiten optischen Datenübertragungsleitung 156. Hierbei ergänzen sich die erste und zweiten Datenübertragungsleitung 155, 156 sowohl im ersten als auch im zweiten Teilbereich 151, 152 jeweils zur optischen Übertragungsstrecke 150.

Erfindungsgemäß ist es nun vorgesehen, dass zur Datenübertragung vom ersten Netzknoten 21 zum zweiten Netzknoten 22 - am Ort des ersten Netzknotens 21 - ein optisches Signal einer ersten Wellenlänge in die erste Datenübertragungsleitung 155 und in die zweite Datenübertragungsleitung 156 eingekoppelt wird und das optische Signal der ersten Wellenlänge - am Ort des zweiten Netzknotens 22 aus wenigstens einer der ersten und zweiten Datenübertragungsleitung 155, 156 ausgekoppelt wird und dass zur Datenübertragung vom zweiten Netzknoten 22 zum ersten Netzknoten 21 - am Ort des zweiten Netzknotens 22 - ein optisches Signal einer von der ersten Wellenlänge unterschiedlichen zweiten Wellenlänge in die erste Datenübertragungsleitung 155 und in die zweite Datenübertragungsleitung 156 eingekoppelt wird und das optische Signal der zweiten Wellenlänge - am Ort des ersten Netzknotens 21 aus wenigstens einer der ersten und zweiten Datenübertragungsleitung 155, 156 ausgekoppelt wird. Folglich wird für eine Datenübertragung vom ersten Netzknoten 21 in Richtung zum zweiten Netzknoten 22 eine andere Wellenlänge bzw. Frequenz verwendet als für eine Datenübertragung vom zweiten Netzknoten 22 in Richtung zum ersten Netzknoten 21. Somit können beide Schutzpfade sich im gleichen Faserbaum bzw. in derselben optischen Übertragungsstrecke 150 befinden. Ein und derselbe Faserbaum kann jetzt jeweils geschützte Verkehre in Hin- und Rückrichtung aufnehmen.

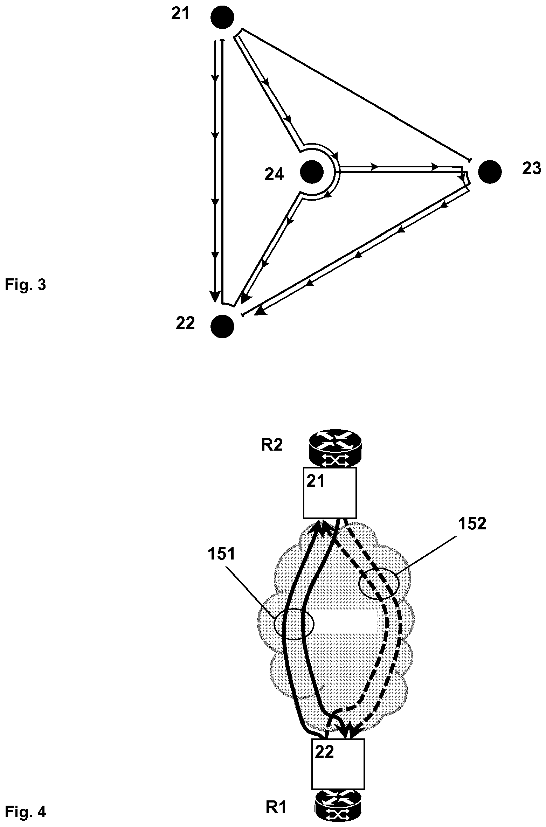

In Figur 4 ist eine Ansicht eines beispielhaften optischen Telekommunikationsnetzes 100 bzw. einer optischen Übertragungsstrecke 150 mit einem ersten Teilbereich 151, einem zweiten Teilbereich 152, mit einem ersten Netzknoten 21 und einem zweiten Netzknoten 22 schematisch dargestellt, wobei der erste Netzknoten 21 (gegenüber dem zweiten Netzknoten 22) ein übergeordneter Netzknoten (und mit der Bezeichnung "R1" versehen) ist, während der zweite Netzknoten ein untergeordneter Netzknoten (und mit der Bezeichnung "R2" versehen) ist.

Ohne Nutzung der vorliegenden Erfindung muss zum Schutz einer bidirektionalen Verbindung immer auf zwei optisch getrennte, topologisch disjunkte Bäume zurückgegriffen werden. Erfindungsgemäß ist es vorteilhaft möglich, beide Verbindungsrichtungen geschützt im gleichen Faserbaum zu führen.

In den Figuren 2 und 3 ist eine Ansicht eines beispielhaften optischen Telekommunikationsnetzes 100 bzw. einer optischen Übertragungsstrecke 150 mit einem ersten Netzknoten 21, einem zweiten Netzknoten 22, einem dritten Netzknoten 23 und einem vierten Netzknoten 24 schematisch dargestellt. Hierbei ist jeder Netzknoten 21, 22, 23, 24 mit jedem anderen Netzknoten 21, 22, 23, 24 über eine Dreieck-Topologie (über einen Zwischenknoten) verbunden. Damit kann jede unidirektionale Verkehrsbeziehung geschützt geführt werden, ohne einen weiteren Faserbaum einführen zu müssen. Die Rückrichtung kann dann ebenfalls geschützt über eine andere Wellenlänge als die Hinrichtung realisiert werden. Ohne intra-Tree-Protection benötigt der Schutz aller Verkehrsbeziehungen die Verwendung von wenigstens zwei Faserbäumen (nicht dargestellt). Selbst das in diesem Fall ermittelte Optimal-Ensemble, bestehend aus zwei Faserbäumen, weist drei gedoppelte, parallele Faserführungen (nämlich von 21 zu 23, von 21 zu 24 und von 24 zu 23) auf. Dies führt auch zu einem größeren Bedarf an Faserverstärkern, was wiederum die Stromkosten des Systems erhöht.

Einige Verkehre können durch ein intra-Tree-Protection-konforme Realisierung der optischen Übertragungsstrecken sogar vor dem Ausfall von mehr als einer Glasfaserstrecke geschützt werden. Dies ist in Figur 3 schematisch für eine Datenübertragung vom ersten Netzknoten 21 zum zweiten Netzknoten 22 dargestellt: Die Datenübertragung kann auch noch durchgeführt werden, wenn sowohl die direkte Verbindung zwischen dem ersten Netzknoten 21 und dem zweiten Netzknoten 22 als auch eine der anderen beiden Verbindungen zum zweiten Netzknoten 22 hin unterbrochen sind (denn für die unidirektionale Verbindung vom ersten Netzknoten 21 zum zweiten Netzknoten 22 treffen gemäß Figur 3 drei logisch gleichwertige Kopien des Sendesignals beim zweiten Netzknoten 22 ein. Sofern eine der Fasern 24-23, 24-22 oder 23-22 ausfällt, bestünde noch immer eine einfach geschützte Verbindung). Notwendige Voraussetzung ist, dass am Empfangsort entsprechende optische Schalter vorhanden sind, die es erlauben, das Signal aus mehreren Empfangsrichtungen auszuwählen. Diese Eigenschaft kann allerdings nicht generell für alle Verkehrsbeziehungen zugesichert werden.

### Vorteile der Erfindung

Wesentliche Vorteile der Erfindung sind:
Bei Intra-Tree Protection - ggfs. gemeinsam mit IrTP - werden weniger Faserbäume im Ensemble der angestrebten Netzlösung benötigt als bei ausschließlicher Nutzung von IrTP. Das bedeutet geringere Kosten für Glasfaser, weniger optische Verstärker und damit einen geringeren Energieverbrauch.

Mit dem IaTP-Ansatz ist es besonders bei zunächst eher geringen Verkehrsvolumina wesentlich leichter möglich, das Netz gemäß der Strategie "build-asyou-grow" sukzessive und bedarfsgetrieben aufzubauen.

Einige Verkehre können durch ein IaTP-konformes Tree-Design sogar vor dem Ausfall von mehr als einer Glasfaserstrecke geschützt werden. Dies kann die Service-Verfügbarkeit weiter erhöhen.

Die Algorithmen zum Auffinden von geeigneten Faserbäumen, d.h. zur Erzeugung einer geeigneten Ensemble-Lösung (allgemein bestehend aus mehreren Faserbäumen), die bereits einen hinreichenden Schutz der geführten Verkehrsströme in filterlosen optischen Telekommunikationsnetzen erlauben, werden wesentlich vereinfacht.

Anforderungen an die Schutzeigenschaften werden heruntergefahren; dadurch kann der Anwender implizit die Anforderungen an weitere Eigenschaften einer Emsemble-Lösung erhöhen. Dies könnte z.B. der Glasfaserbedarf des Ensembles oder die Länge des längsten Baumes sein.

Ein bereits für ausschließlich IrTP errechntes Ensemble besitzt durch laTP unmittelbar eine deutlich verbesserte Schutzrate. Dadurch entstehen mehr Lösungen auf der sogenannten Pareto-Front.

Bei IrTP stellt die Zuordnung der Wellenlängen zu den jeweiligen Verkehrsbeziehungen ein enormes Problem dar. Durch das Fehlen von optischen Filtern kann eine Wellenlänge in einem Faserbaum für lediglich eine Verkehrsbeziehung genutzt werden. Dies kann zu schwierigen Kopplungseffekten führen, wenn eine in einem dritten Baum geführte Verkehrsbeziehung diese Wellenlänge ebenfalls nicht nutzen kann, falls sie einen der beiden ursprünglichen Bäume zum Schutz benötigt. Diese Kopplung kann sich auf beliebig viele Bäume auswirken.

Durch die Verwendung von laTP wird die Wellenlängenzuordnung zu einem lokal optimierbaren Problem, da jegliche Kopplungseffekte durch Wahl einer anderen Wellenlänge umgangen werden können. Die Komplexität der Wellenlängenzuordnung wird deutlich reduziert.

Zur Umsetzung der Erfindung benötigen kohärente Sendeempfänger (Sende- und Empfangselemente) zwei unterschiedliche Laser, damit die Wellenlängen für Sende- und Empfangsrichtung unterschiedlich gewählt werden können. Dadurch kommt es allerdings insgesamt nicht zu nennenswert höheren Kosten, weil damit auf die eventuell notwendige Transceiver-interne Verstärkungsbaugruppe verzichtet werden kann. Bei zukünftiger 16QAM-Modulation (oder noch höherstufigen Formaten) hat man ohnehin eine geringere Modulationseffizienz, so dass zukünftig Dual-Laser Transceiver wieder an Attraktivität gewinnen werden.

Möglicherweise müssen Netzbetreiber entsprechend zwei verschiedene Bauweisen verwenden, je nach dem, welche Schutzvariante für eine Verbindung implementiert wird. Da die beiden Laser in einem dual-laser Transceiver auch einfach auf dieselbe Wellenlänge eingestellt werden können, könnte man zur betrieblichen Vereinfachung auch generell Dual-Laser Transceiver verwenden.

## Patentansprüche

1. Verfahren zur effektiven Datenübertragung in einem optischen Telekommunikationsnetz (100) im Wellenlängen-Multiplex-Betrieb, WDM, wavelength division multiplex, einer Mehrzahl von verschiedenen optischen Wellenlängen, wobei das optische Telekommunikationsnetz (100) eine Mehrzahl von Netzknoten (21, 22, 23, 24) aufweist,
wobei jeweils ein Paar von Netzknoten aus der Mehrzahl von Netzknoten (21, 22, 23, 24) - umfassend einen ersten Netzknoten (21) und einen zweiten Netzknoten (22) - mittels wenigstens einer optischen Übertragungsstrecke (150) zur Datenübertragung miteinander verbunden sind, wobei die wenigstens eine optische Übertragungsstrecke (150) einen ersten Teilbereich (151) und einen zweiten Teilbereich (152) derart aufweist, dass der erste und zweite Netzknoten (21, 22) mittels des ersten Teilbereichs (151) der wenigstens einen optischen Übertragungsstrecke (150) miteinander verbunden sind und der erste und zweite Netzknoten (21, 22) unabhängig davon mittels des zweiten Teilbereichs (152) der wenigstens einen optischen Übertragungsstrecke (150) ebenfalls miteinander verbunden sind,
wobei die optische Übertragungsstrecke (150) zur Datenübertragung in eine erste Richtung wenigstens eine erste optische Datenübertragungsleitung (155) und zur Datenübertragung in eine der ersten Richtung entgegengesetzte zweite Richtung wenigstens eine zweite optische Datenübertragungsleitung (156) aufweist, wobei die Datenübertragung sowohl auf der ersten optischen Datenübertragungsleitung (155) als auch auf der zweiten optischen Datenübertragungsleitung (156) filterlos für die Mehrzahl von optischen Wellenlängen erfolgt,
wobei der erste Teilbereich (151) der wenigstens einen optischen Übertragungsstrecke (150) den ersten und zweiten Netzknoten (21, 22) zur Datenübertragung sowohl in der Richtung vom ersten Netzknoten (21) zum zweiten Netzknoten (22) - mittels der ersten optischen Datenübertragungsleitung (155) - als auch in der Richtung vom zweiten Netzknoten (22) zum ersten Netzknoten (21)- mittels der zweiten optischen Datenübertragungsleitung (156) - verbindet,
wobei der zweite Teilbereich (152) der wenigstens einen optischen Übertragungsstrecke (150) den ersten und zweiten Netzknoten (21, 22) zur Datenübertragung sowohl in der Richtung vom zweiten Netzknoten (22) zum ersten Netzknoten (21) - mittels der ersten optischen Datenübertragungsleitung (155) - als auch in der Richtung vom ersten Netzknoten (21) zum zweiten Netzknoten (22) - mittels der zweiten optischen Datenübertragungsleitung (156) - verbindet,
wobei sich sowohl im ersten als auch im zweiten Teilbereich (151, 152) die erste Datenübertragungsleitung (155) und die zweite Datenübertragungsleitung (156) jeweils zu der optischen Übertragungsstrecke (150) ergänzen, wobei das Verfahren die folgenden Schritte umfasst:
-- zur Datenübertragung vom ersten Netzknoten (21) zum zweiten Netzknoten (22) wird - am Ort des ersten Netzknotens (21) - ein optisches Signal einer ersten Wellenlänge in die erste Datenübertragungsleitung (155) und in die zweite Datenübertragungsleitung (156) eingekoppelt und das optische Signal der ersten Wellenlänge - am Ort des zweiten Netzknotens (22) aus wenigstens einer der ersten und zweiten Datenübertragungsleitung (155, 156) ausgekoppelt und
-- zur Datenübertragung vom zweiten Netzknoten (22) zum ersten Netzknoten (21) wird - am Ort des zweiten Netzknotens (22) - ein optisches Signal einer von der ersten Wellenlänge unterschiedlichen zweiten Wellenlänge in die erste Datenübertragungsleitung (155) und in die zweite Datenübertragungsleitung (156) eingekoppelt und das optische Signal der zweiten Wellenlänge - am Ort des ersten Netzknotens (21) aus wenigstens einer der ersten und zweiten Datenübertragungsleitung (155, 156) ausgekoppelt.

2. Verfahren nach Anspruch 1, **dadurch gekennzeichnet, dass**
-- in einem Normalbetriebsmodus der optischen Übertragungsstrecke (150) am Ort des zweiten Netzknotens (22) das aus der ersten Datenübertragungsleitung (155) ausgekoppelte optische Signal der ersten Wellenlänge und/oder am Ort des ersten Netzknotens (21) das aus der zweiten Datenübertragungsleitung (156) ausgekoppelte optische Signal der zweiten Wellenlänge verwendet wird und
-- in einem Fehlerfallbetriebsmodus der optischen Übertragungsstrecke (150) am Ort des zweiten Netzknotens (22) das aus der zweiten Datenübertragungsleitung (156) ausgekoppelte optische Signal der ersten Wellenlänge und/oder am Ort des ersten Netzknotens (21) das aus der ersten Datenübertragungsleitung (155) ausgekoppelte optische Signal der zweiten Wellenlänge verwendet wird.

3. Verfahren nach Anspruch 2, **dadurch gekennzeichnet, dass** zwischen dem Normalbetriebsmodus und dem Fehlerfallbetriebsmodus innerhalb eines Zeitintervalls nach Eintreten des Fehlerfalls umgeschaltet wird, wobei das Zeitintervall kleiner als bis maximal gleich 100 Millisekunden, bevorzugt kleiner als bis maximal gleich 50 Millisekunden, besonders bevorzugt kleiner als bis maximal gleich 30 Millisekunden, ist.

4. Verfahren nach einem der vorhergehenden Ansprüche, **dadurch gekennzeichnet, dass** der erste und zweite Netzknoten (21, 22) übergeordnete Netzknoten (R2) des optischen Telekommunikationsnetzes (100) sind, wobei das optische Telekommunikationsnetz (100) neben den Netzknoten (21, 22, 23, 24) eine Mehrzahl von Netzelementen (R1) aufweist.

5. Verfahren nach einem der vorhergehenden Ansprüche, **dadurch gekennzeichnet, dass** der erste Netzknoten (21) ein übergeordneter Netzknoten (R2) des optischen Telekommunikationsnetzes (100) ist und der zweite Netzknoten (22) ein Netzelement (R1) ist.

6. Verfahren nach einem der vorhergehenden Ansprüche, **dadurch gekennzeichnet, dass** der erste Netzknoten (21) und der zweite Netzknoten (22) jeweils einen optischen Zwei-Laser-Sendeempfänger (Dual-Laser-Transceiver) aufweisen, wobei mittels eines ersten Lasers des Zwei-Laser-Sendeempfängers die erste Wellenlänge und mittels eines zweiten Lasers des Zwei-Laser-Sendeempfängers die zweite Wellenlänge generiert wird.

7. Optisches Telekommunikationsnetz (100) zur effektiven Datenübertragung in einem optischen Telekommunikationsnetz (100) im Wellenlängen-Multiplex-Betrieb, WDM, wavelength division multiplex, einer Mehrzahl von verschiedenen optischen Wellenlängen, wobei das optische Telekommunikationsnetz (100) eine Mehrzahl von Netzknoten (21, 22, 23, 24) aufweist,
wobei jeweils ein Paar von Netzknoten aus der Mehrzahl von Netzknoten (21, 22, 23, 24) - umfassend einen ersten Netzknoten (21) und einen zweiten Netzknoten (21) - mittels wenigstens einer optischen Übertragungsstrecke (150) zur Datenübertragung miteinander verbunden sind, wobei die wenigstens eine optische Übertragungsstrecke (150) einen ersten Teilbereich (151) und einen zweiten Teilbereich (152) derart aufweist, dass der erste und zweite Netzknoten (21, 22) mittels des ersten Teilbereichs (151) der wenigstens einen optischen Übertragungsstrecke (150) miteinander verbunden sind und der erste und zweite Netzknoten (21, 22) unabhängig davon mittels des zweiten Teilbereichs (152) der wenigstens einen optischen Übertragungsstrecke (150) ebenfalls miteinander verbunden sind,
wobei die optische Übertragungsstrecke (150) zur Datenübertragung in eine erste Richtung wenigstens eine erste optische Datenübertragungsleitung (155) und zur Datenübertragung in eine der ersten Richtung entgegengesetzte zweite Richtung wenigstens eine zweite optische Datenübertragungsleitung (156) aufweist, wobei das optische Telekommunikationsnetz (100) derart konfiguriert ist, dass die Datenübertragung sowohl auf der ersten optischen Datenübertragungsleitung (155) als auch auf der zweiten optischen Datenübertragungsleitung (156) filterlos für die Mehrzahl von optischen Wellenlängen erfolgt,
wobei der erste Teilbereich (151) der wenigstens einen optischen Übertragungsstrecke (150) den ersten und zweiten Netzknoten (21, 22) zur Datenübertragung sowohl in der Richtung vom ersten Netzknoten (21) zum zweiten Netzknoten (22) - mittels der ersten optischen Datenübertragungsleitung (155) - als auch in der Richtung vom zweiten Netzknoten (22) zum ersten Netzknoten (21)- mittels der zweiten optischen Datenübertragungsleitung (156) - verbindet,
wobei der zweite Teilbereich (152) der wenigstens einen optischen Übertragungsstrecke (150) den ersten und zweiten Netzknoten (21, 22) zur Datenübertragung sowohl in der Richtung vom zweiten Netzknoten (22) zum ersten Netzknoten (21) - mittels der ersten optischen Datenübertragungsleitung (155) - als auch in der Richtung vom ersten Netzknoten (21) zum zweiten Netzknoten (22) - mittels der zweiten optischen Datenübertragungsleitung (156) - verbindet,
wobei sich im ersten und zweiten Teilbereich (151, 152) sowohl die erste Datenübertragungsleitung (155) als auch die zweite Datenübertragungsleitung (156) jeweils zu der optischen Übertragungsstrecke (150) ergänzt, wobei das optische Telekommunikationsnetz (100) derart konfiguriert ist, dass:
-- zur Datenübertragung vom ersten Netzknoten (21) zum zweiten Netzknoten (22) - am Ort des ersten Netzknotens (21) - ein optisches Signal einer ersten Wellenlänge in die erste Datenübertragungsleitung (155) und in die zweite Datenübertragungsleitung (156) eingekoppelt und das optische Signal der ersten Wellenlänge - am Ort des zweiten Netzknotens (22) aus wenigstens einer der ersten und zweiten Datenübertragungsleitung (155, 156) ausgekoppelt wird und
-- zur Datenübertragung vom zweiten Netzknoten (22) zum ersten Netzknoten (21) - am Ort des zweiten Netzknotens (22) - ein optisches Signal einer von der ersten Wellenlänge unterschiedlichen zweiten Wellenlänge in die erste Datenübertragungsleitung (155) und in die zweite Datenübertragungsleitung (156) eingekoppelt das optische Signal der zweiten Wellenlänge - am Ort des ersten Netzknotens (21) aus wenigstens einer der ersten und zweiten Datenübertragungsleitung (155, 156) ausgekoppelt wird.

8. Optisches Telekommunikationsnetz (100) nach Anspruch 7, **dadurch gekennzeichnet, dass** das optische Telekommunikationsnetz (100) derart konfiguriert ist, dass
-- in einem Normalbetriebsmodus der optischen Übertragungsstrecke (150) am Ort des zweiten Netzknotens (22) das aus der ersten Datenübertragungsleitung (155) ausgekoppelte optische Signal der ersten Wellenlänge und/oder am Ort des ersten Netzknotens (21) das aus der zweiten Datenübertragungsleitung (156) ausgekoppelte optische Signal der zweiten Wellenlänge verwendet wird und
-- in einem Fehlerfallbetriebsmodus der optischen Übertragungsstrecke (150) am Ort des zweiten Netzknotens (22) das aus der zweiten Datenübertragungsleitung (156) ausgekoppelte optische Signal der ersten Wellenlänge und/oder am Ort des ersten Netzknotens (21) das aus der ersten Datenübertragungsleitung (155) ausgekoppelte optische Signal der zweiten Wellenlänge verwendet wird.

9. Optisches Telekommunikationsnetz (100) nach einem der Ansprüche 7 oder 8, **dadurch gekennzeichnet, dass** der erste und zweite Netzknoten (21, 22) übergeordnete Netzknoten (R2) des optischen Telekommunikationsnetzes (100) sind, wobei das optische Telekommunikationsnetz (100) daneben eine Mehrzahl von Netzelementen (R1) aufweist.

10. Optisches Telekommunikationsnetz (100) nach einem der Ansprüche 7 bis 9, **dadurch gekennzeichnet, dass** der erste Netzknoten (21) ein übergeordneter Netzknoten (R2) des optischen Telekommunikationsnetzes (100) ist und der zweite Netzknoten (22) ein Netzelement (R1) ist.

11. Optisches Telekommunikationsnetz (100) nach einem der Ansprüche 7 bis 10, **dadurch gekennzeichnet, dass** der erste Netzknoten (21) und der zweite Netzknoten (22) jeweils einen optischen Zwei-Laser-Sendeempfänger (Dual-Laser-Transceiver) aufweisen, wobei der mittels eines ersten Lasers des Zwei-Laser-Sendeempfängers die erste Wellenlänge und mittels eines zweiten Lasers des Zwei-Laser-Sendeempfängers die zweite Wellenlänge generiert wird.

12. Verwendung eines Netzknotens (21, 22, 23, 24) in einem optischen Telekommunikationsnetz (100) nach einem der Ansprüche 7 bis 11, wobei der Netzknoten (21, 22, 23, 24) einen optischen Zwei-Laser-Sendeempfänger (Dual-Laser-Transceiver) aufweist und wobei der Netzknoten (21, 22, 23, 24) ein übergeordneter Netzknoten (R2) oder ein Netzelement (R1) des optischen Telekommunikationsnetzes (100) ist.

13. Computerprogramm mit Programmcodemitteln, mit deren Hilfe alle Schritte eines Verfahrens nach einem der Ansprüche 1 bis 6 durchführbar sind, wenn das Computerprogramm auf einer programmierbaren Einrichtung und/oder einem Netzknoten (21, 22, 23, 24) ausgeführt wird.

14. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 6 durchführbar sind, wenn das Computerprogramm auf einer programmierbaren Einrichtung und/oder einem Netzknoten (21, 22, 23, 24) ausgeführt wird.

## Claims

1. Method for effective data transmission in an optical telecommunications network (100) by wavelength-division multiplexing, WDM, of a plurality of different optical wavelengths, the optical telecommunications network (100) having a plurality of network nodes (21, 22, 23, 24),
each pair of network nodes in the plurality of network nodes (21, 22, 23, 24) - comprising a first network node (21) and a second network node (22) - being interconnected by at least one optical transmission path (150) for data transmission, the at least one optical transmission path (150) having a first sub-region (151) and a second sub-region (152) in such a way that the first and second network nodes (21, 22) are interconnected by the first sub-region (151) of the at least one optical transmission path (150) and independently thereof the first and second network nodes (21, 22) are interconnected by the second sub-region (152) of the at least one optical transmission path (150),
the optical transmission path (150) having at least one first optical data transmission line (155) for data transmission in a first direction and at least one second optical data transmission line (156) for data transmission in a second direction counter to the first direction, the data transmission both on the first optical data transmission line (155) and on the second optical data transmission line (156) being unfiltered for the plurality of optical wavelengths,
the first sub-region (151) of the at least one optical transmission path (150) connecting the first and second network nodes (21, 22) for data transmission both in the direction from the first network node (21) to the second network node (22) - by means of the first optical data transmission line (155) - and in the direction from the second network node (22) to the first network node (21) - by means of the second optical data transmission line (156) -, the second sub-region (152) of the at least one optical transmission path (150) connecting the first and second network nodes (21, 22) for data transmission both in the direction from the second network node (22) to the first network node (21) - by means of the first optical data transmission line (155) - and in the direction from the first network node (21) to the second network node (22) - by means of the second optical data transmission line (156) -, the first data transmission line (155) and the second data transmission line (156) each complementing the other to form the optical transmission path (150) both in the first and in the second sub-region (151, 152), wherein the method comprises the following steps:
- for data transmission from the first network node (21) to the second network node (22), an optical signal of a first wavelength is coupled - at the location of the first network node (21) - into the first data transmission line (155) and into the second data transmission line (156), and the optical signal of the first wavelength is coupled - at the location of the second network node (22) - out of at least one of the first and second data transmission lines (155, 156), and
- for data transmission from the second network node (22) to the first network node (21), an optical signal of a second wavelength different from the first wavelength is coupled - at the location of the second network node (22) - into the first data transmission line (155) and into the second data transmission line (156), and the optical signal of the second wavelength is coupled - at the location of the first network node (21) - out of at least one of the first and second data transmission lines (155, 156).

2. Method according to claim 1, **characterised in that**
- in a normal mode of operation of the optical transmission path (150), the optical signal of the first wavelength coupled out of the first data transmission line (155) is used at the location of the second network node (22) and/or the optical signal of the second wavelength coupled out of the second data transmission line (156) is used at the location of the first network node (21), and
- in an error mode of operation of the optical transmission path (150), the optical signal of the first wavelength coupled out of the second data transmission line (156) is used at the location of the second network node (22) and/or the optical signal of the second wavelength coupled out of the first data transmission line (155) is used at the location of the first network node (21).

3. Method according to claim 2, **characterised in that**, switching between the normal mode of operation and the error mode of operation takes place within a time interval after the error occurs, the time interval being less than or at most equal to 100 milliseconds, preferably less than or at most equal to 50 milliseconds, particularly preferably less than or at most equal to 30 milliseconds.

4. Method according to any of the preceding claims, **characterised in** the first and second network nodes (21, 22) are superordinate network nodes (R2) of the optical telecommunications network (100), the optical telecommunications network (100) having a plurality of network elements (R1) in addition to the network nodes (21, 22, 23, 24).

5. Method according to any of the preceding claims, **characterised in that** the first network node (21) is a superordinate network node (R2) of the optical telecommunications network (100) and the second network node (22) is a network element (R1).

6. Method according to any of the preceding claims, **characterised in that** the first network node (21) and the second network node (22) each have an optical dual-laser transceiver, the first wavelength being generated by a first laser of the dual-laser transceiver and the second wavelength being generated by a second laser of the dual-laser transceiver.

7. Optical telecommunications network (100) for effective data transmission in an optical telecommunications network (100) by wavelength-division multiplexing, WDM, of a plurality of different optical wavelengths, the optical telecommunications network (100) having a plurality of network nodes (21, 22, 23, 24),
each pair of network nodes in the plurality of network nodes (21, 22, 23, 24) - comprising a first network node (21) and a second network node (22) - being interconnected by at least one optical transmission path (150) for data transmission, the at least one optical transmission path (150) having a first sub-region (151) and a second sub-region (152) in such a way that the first and second network nodes (21, 22) are interconnected by the first sub-region (151) of the at least one optical transmission path (150) and independently thereof the first and second network nodes (21, 22) are interconnected by the second sub-region (152) of the at least one optical transmission path (150),
the optical transmission path (150) having at least one first optical data transmission line (155) for data transmission in a first direction and at least one second optical data transmission line (156) for data transmission in a second direction counter to the first direction, wherein the optical telecommunications network (100) is configured in such a way that the data transmission both on the first optical data transmission line (155) and on the second optical data transmission line (156) being unfiltered for the plurality of optical wavelengths,
the first sub-region (151) of the at least one optical transmission path (150) connecting the first and second network nodes (21, 22) for data transmission both in the direction from the first network node (21) to the second network node (22) - by means of the first optical data transmission line (155) - and in the direction from the second network node (22) to the first network node (21) - by means of the second optical data transmission line (156) -, the second sub-region (152) of the at least one optical transmission path (150) connecting the first and second network nodes (21, 22) for data transmission both in the direction from the second network node (22) to the first network node (21) - by means of the first optical data transmission line (155) - and in the direction from the first network node (21) to the second network node (22) - by means of the second optical data transmission line (156) -, the first data transmission line (155) and the second data transmission line (156) each complementing the other to form the optical transmission path (150) both in the first and in the second sub-region (151, 152), wherein the optical telecommunications network (100) is configured in such a way that:
- for data transmission from the first network node (21) to the second network node (22), an optical signal of a first wavelength is coupled - at the location of the first network node (21) - into the first data transmission line (155) and into the second data transmission line (156), and the optical signal of the first wavelength is coupled - at the location of the second network node (22) - out of at least one of the first and second data transmission lines (155, 156), and
- for data transmission from the second network node (22) to the first network node (21), an optical signal of a second wavelength different from the first wavelength is coupled - at the location of the second network node (22) - into the first data transmission line (155) and into the second data transmission line (156), and the optical signal of the second wavelength is coupled - at the location of the first network node (21) - out of at least one of the first and second data transmission lines (155, 156).

8. Optical telecommunications network (100) according to claim 7, **characterised in that** the optical telecommunications network (100) is configured in such a way that
- in a normal mode of operation of the optical transmission path (150), the optical signal of the first wavelength coupled out of the first data transmission line (155) is used at the location of the second network node (22) and/or the optical signal of the second wavelength coupled out of the second data transmission line (156) is used at the location of the first network node (21), and
- in an error mode of operation of the optical transmission path (150), the optical signal of the first wavelength coupled out of the second data transmission line (156) is used at the location of the second network node (22) and/or the optical signal of the second wavelength coupled out of the first data transmission line (155) is used at the location of the first network node (21).

9. Optical telecommunications network (100) according to either claim 7 or claim 8, **characterised in** the first and second network nodes (21, 22) are superordinate network nodes (R2) of the optical telecommunications network (100), the optical telecommunications network (100) additionally having a plurality of network elements (R1).

10. Optical telecommunications network (100) according to any of claims 7 to 9, **characterised in that** the first network node (21) is a superordinate network node (R2) of the optical telecommunications network (100) and the second network node (22) is a network element (R1).

11. Optical telecommunications network (100) according to any of claims 7 to 10, **characterised in that** the first network node (21) and the second network node (22) each have an optical dual-laser transceiver, the first wavelength being generated by a first laser of the dual-laser transceiver and the second wavelength being generated by a second laser of the dual-laser transceiver.

12. Use of a network node (21, 22, 23, 24) in an optical telecommunications network (100) according to any of claims 7 to 11, wherein the network node (21, 22, 23, 24) has an optical dual-laser transceiver and wherein the network node (21, 22, 23, 24) is a superordinate network node (R2) or a network element (R1) of the optical telecommunications network (100).

13. Computer program comprising program code means by way of which all steps of a method according to any of claims 1 to 6 can be carried out when the computer program is executed on a programmable device and/or on a network node (21, 22, 23, 24).

14. Computer program product comprising a computer-readable medium and comprising a computer program which is stored on the computer-readable medium and which comprises appropriate program code means for all steps of a method according to any of claims 1 to 6 to be able to be carried out when the computer program is executed on a programmable device and/or on a network node (21, 22, 23, 24).

## Revendications

1. Procédé destiné à la transmission efficace des données dans un réseau de télécommunications optique (100) fonctionnant en multiplexage spectral (ou WDM, ou wavelength division multiplex, à savoir une pluralité de longueurs d'ondes optiquement différentes), dans lequel le réseau de télécommunications optique (100) comporte une pluralité de noeuds réseau (21, 22, 23, 24),
dans lequel une paire de noeuds réseau parmi la pluralité de noeuds réseau (21, 22, 23, 24) - comprenant un premier noeud réseau (21) et un deuxième noeud réseau (22) - sont respectivement raccordés l'un à l'autre au moyen d'au moins une piste de transmission optique (150) pour la transmission des données, dans lequel l'au moins une piste de transmission optique (150) comporte une première zone (151) et une deuxième zone (152) de telle sorte que le premier et le deuxième noeud réseau (21, 22) sont raccordés l'un à l'autre au moyen de la première zone (151) de l'au moins une piste de transmission optique (150) et, indépendamment, que le premier et le deuxième noeud réseau (21, 22) sont également raccordés l'un à l'autre au moyen de la deuxième zone (152) de l'au moins une piste de transmission optique (150),
dans lequel la piste de transmission optique (150) comporte au moins un premier conduit optique de transmission de données (155) pour la transmission des données dans une première direction et au moins un deuxième conduit optique de transmission de données (156) pour la transmission des données dans une deuxième direction opposée à la première direction, dans lequel la transmission des données s'effectue sans filtre pour la pluralité des longueurs d'onde optique aussi bien sur le premier conduit optique de transmission de données (155) que sur le deuxième conduit optique de transmission de données (156),
dans lequel la première zone (151) de l'au moins une piste de transmission optique (150) raccorde le premier et le deuxième noeuds réseau (21, 22) pour transmission de données aussi bien dans le sens du premier noeud réseau (21) vers le deuxième noeud réseau (22) - au moyen du premier conduit optique de transmission de données (155) - que dans le sens du deuxième noeud réseau (22) vers le premier noeud réseau (21) - au moyen du deuxième conduit optique de transmission de données (156),
dans lequel la deuxième zone (152) de l'au moins une piste de transmission optique (150) raccorde le premier et le deuxième noeud réseau (21, 22) pour transmission de données aussi bien dans le sens du deuxième noeud réseau (22) vers deuxième noeud réseau (21) - au moyen du premier conduit optique de transmission de données (155) - que dans le sens du premier noeud réseau (21) vers le deuxième noeud réseau (22) - au moyen du deuxième conduit optique de transmission de données (156),
dans lequel le premier conduit optique de transmission de données (155) et le deuxième conduit optique de transmission de données (156) sont respectivement complémentaires aussi bien dans la première que dans la deuxième zone (151, 152) pour former la piste de transmission optique (150), dans lequel le procédé comprend les étapes suivantes :
- pour la transmission des données du premier noeud réseau (21) au deuxième noeud réseau (22), un signal optique d'une première longueur d'onde est couplé - à l'endroit du premier noeud réseau (21) - dans le premier conduit optique de transmission de données (155) et dans le deuxième conduit optique de transmission de données (156) et le signal optique de la première longueur d'onde est découplé - à l'endroit du deuxième noeud réseau (22) - d'au moins un parmi le premier et le deuxième conduits optiques de transmission de données (155, 156) et
- pour la transmission des données du deuxième noeud réseau (22) au premier noeud réseau (21), un signal optique d'une deuxième longueur d'onde différente de la première longueur d'onde est couplé - à l'endroit du deuxième noeud réseau (22) - dans le premier conduit optique de transmission de données (155) et dans le deuxième conduit optique de transmission de données (156) et le signal optique de la deuxième longueur d'onde est découplé - à l'endroit du premier noeud réseau (21) - d'au moins un parmi le premier et le deuxième conduits optiques de transmission de données (155, 156).

2. Procédé d'après la revendication 1, **caractérisé en ce que**
- dans un mode de fonctionnement normal de la piste de transmission optique (150), le signal optique de la première longueur d'onde découplé du premier conduit optique de transmission de données (155) est utilisé à l'endroit du deuxième noeud réseau (22) et/ou le signal optique de la deuxième longueur d'onde découplé du deuxième conduit optique de transmission de données (156) est utilisé à l'endroit du premier noeud réseau (21) et
- dans un mode de fonctionnement de défaillance de la piste de transmission optique (150), le signal optique de la première longueur d'onde découplé du deuxième conduit optique de transmission de données (156) est utilisé à l'endroit du deuxième noeud réseau (22) et/ou le signal optique de la deuxième longueur d'onde découplé du premier conduit optique de transmission de données (155) est utilisé à l'endroit du premier noeud réseau (21).

3. Procédé d'après la revendication 2, **caractérisé en ce qu'**une commutation entre le mode de fonctionnement normal et le mode de fonctionnement de défaillance est effectué dans un laps de temps après qu'une défaillance a eu lieu, dans lequel le laps de temps est inférieur ou égal à un maximum de 100 millisecondes, de préférence inférieur ou égal à un maximum de 50 millisecondes, particulièrement inférieur ou égal à un maximum de 30 millisecondes.

4. Procédé d'après l'une des revendications ci-dessus, **caractérisé en ce que** le premier et le deuxième noeuds réseau (21, 22) sont des noeuds réseau supérieurs (R2) du réseau de télécommunications optique (100), dans lequel le réseau de télécommunications optique (100) comporte outre les noeuds réseau (21, 22, 23, 24) une pluralité d'éléments réseau (R1).

5. Procédé d'après l'une des revendications ci-dessus, **caractérisé en ce que** le premier noeud réseau (21) est un noeud réseau supérieur (R2) du réseau de télécommunications optique (100) et le deuxième noeud réseau (22) est un élément réseau (R1).

6. Procédé d'après l'une des revendications ci-dessus, **caractérisé en ce que** le premier noeud réseau (21) et le deuxième noeud réseau (22) comportent respectivement un émetteur-récepteur laser double (Dual-Laser-Transceiver), dans lequel la première longueur d'onde est générée au moyen d'un premier laser de l'émetteur-récepteur laser double et la deuxième longueur d'onde est générée au moyen d'un deuxième laser de l'émetteur-récepteur laser double.

7. Réseau de télécommunications optique (100) destiné à la transmission efficace des données dans un réseau de télécommunications optique (100) fonctionnant en multiplexage spectral (ou WDM, ou wavelength division multiplex, à savoir une pluralité de longueurs d'ondes optiquement différentes), dans lequel le réseau de télécommunications optique (100) comporte une pluralité de noeuds réseau (21, 22, 23, 24),
dans lequel une paire de noeuds réseau parmi la pluralité de noeuds réseau (21, 22, 23, 24) - comprenant un premier noeud réseau (21) et un deuxième noeud réseau (22) - sont respectivement raccordés l'un à l'autre au moyen d'au moins une piste de transmission optique (150) pour la transmission des données, dans lequel l'au moins une piste de transmission optique (150) comporte une première zone (151) et une deuxième zone (152) de telle sorte que le premier et le deuxième noeud réseau (21, 22) sont raccordés l'un à l'autre au moyen de la première zone (151) de l'au moins une piste de transmission optique (150) et, indépendamment, que le premier et le deuxième noeud réseau (21, 22) sont également raccordés l'un à l'autre au moyen de la deuxième zone (152) de l'au moins une piste de transmission optique (150),
dans lequel la piste de transmission optique (150) comporte au moins un premier conduit optique de transmission de données (155) pour la transmission des données dans une première direction et au moins un deuxième conduit optique de transmission de données (156) pour la transmission des données dans une deuxième direction opposée à la première direction, dans lequel le réseau de télécommunications optique (100) est configuré de telle sorte que la transmission des données s'effectue sans filtre pour la pluralité des longueurs d'onde optique aussi bien sur le premier conduit optique de transmission de données (155) que sur le deuxième conduit optique de transmission de données (156),
dans lequel la première zone (151) de l'au moins une piste de transmission optique (150) raccorde le premier et le deuxième noeuds réseau (21, 22) pour transmission de données aussi bien dans le sens du premier noeud réseau (21) vers le deuxième noeud réseau (22) - au moyen du premier conduit optique de transmission de données (155) - que dans le sens du deuxième noeud réseau (22) vers le premier noeud réseau (21) - au moyen du deuxième conduit optique de transmission de données (156),
dans lequel la deuxième zone (152) de l'au moins une piste de transmission optique (150) raccorde le premier et le deuxième noeud réseau (21, 22) pour transmission de données aussi bien dans le sens du deuxième noeud réseau (22) vers deuxième noeud réseau (21) - au moyen du premier conduit optique de transmission de données (155) - que dans le sens du premier noeud réseau (21) vers le deuxième noeud réseau (22) - au moyen du deuxième conduit optique de transmission de données (156),
dans lequel aussi bien le premier conduit optique de transmission de données (155) que le deuxième conduit optique de transmission de données (156) sont respectivement complémentaires dans la première et la deuxième zones (151, 152) pour former la piste de transmission optique (150), dans lequel le réseau de télécommunications optique (100) est configuré de telle sorte que :
- pour la transmission des données du premier noeud réseau (21) au deuxième noeud réseau (22), un signal optique d'une première longueur d'onde est couplé - à l'endroit du premier noeud réseau (21) - dans le premier conduit optique de transmission de données (155) et dans le deuxième conduit optique de transmission de données (156) et le signal optique de la première longueur d'onde est découplé - à l'endroit du deuxième noeud réseau (22) - d'au moins un parmi le premier et le deuxième conduits optiques de transmission de données (155, 156) et
- pour la transmission des données du deuxième noeud réseau (22) au premier noeud réseau (21), un signal optique d'une deuxième longueur d'onde différente de la première longueur d'onde est couplé - à l'endroit du deuxième noeud réseau (22) - dans le premier conduit optique de transmission de données (155) et dans le deuxième conduit optique de transmission de données (156) le signal optique de la deuxième longueur d'onde est découplé - à l'endroit du premier noeud réseau (21) - d'au moins un parmi le premier et le deuxième conduits optiques de transmission de données (155, 156).

8. Réseau de télécommunications optique (100) d'après la revendication 7, **caractérisé en ce que** le réseau de télécommunications optique (100) est configuré de telle sorte que
- dans un mode de fonctionnement normal de la piste de transmission optique (150), le signal optique de la première longueur d'onde découplé du premier conduit optique de transmission de données (155) est utilisé à l'endroit du deuxième noeud réseau (22) et/ou le signal optique de la deuxième longueur d'onde découplé du deuxième conduit optique de transmission de données (156) est utilisé à l'endroit du premier noeud réseau (21) et
- dans un mode de fonctionnement de défaillance de la piste de transmission optique (150), le signal optique de la première longueur d'onde découplé du deuxième conduit optique de transmission de données (156) est utilisé à l'endroit du deuxième noeud réseau (22) et/ou le signal optique de la deuxième longueur d'onde découplé du premier conduit optique de transmission de données (155) est utilisé à l'endroit du premier noeud réseau (21).

9. Réseau de télécommunications optique (100) d'après l'une des revendications 7 ou 8, **caractérisé en ce que** le premier et le deuxième noeuds réseau (21, 22) sont des noeuds réseau supérieurs (R2) du réseau de télécommunications optique (100), dans lequel le réseau de télécommunications optique (100) comporte en outre une pluralité d'éléments réseau (R1).

10. Réseau de télécommunications optique (100) d'après l'une des revendications 7 à 9, **caractérisé en ce que** le premier noeud réseau (21) est un noeud réseau supérieur (R2) du réseau de télécommunications optique (100) et le deuxième noeud réseau (22) est un élément réseau (R1).

11. Réseau de télécommunications optique (100) d'après l'une des revendications 7 à 10, **caractérisé en ce que** le premier noeud réseau (21) et le deuxième noeud réseau (22) comportent respectivement un émetteur-récepteur laser double (Dual-Laser-Transceiver), dans lequel la première longueur d'onde est générée au moyen d'un premier laser de l'émetteur-récepteur laser double et la deuxième longueur d'onde est générée au moyen d'un deuxième laser de l'émetteur-récepteur laser double.

12. Utilisation d'un noeud réseau (21, 22, 23, 24) dans un réseau de télécommunications optique (100) d'après l'une des revendications 7 à 11, dans lequel le noeud réseau (21, 22, 23, 24) comporte un émetteur-récepteur laser double (Dual-Laser-Transceiver) optique et dans lequel le noeud réseau (21, 22, 23, 24) est un noeud réseau supérieur (R2) ou un élément réseau (R1) du réseau de télécommunications optique (100).

13. Programme informatique doté de moyens de code de programme, à l'aide desquels toutes les étapes d'un procédé d'après l'une des revendications 1 à 6 peuvent être mises en oeuvre, lorsque le programme informatique est exécuté sur un dispositif programmable et/ou sur un noeud réseau (21, 22, 23, 24).

14. Produit-programme informatique doté d'un support lisible par ordinateur et d'un programme informatique enregistré sur le support lisible par ordinateur doté de moyens de code de programme, qui sont adaptés de telle sorte que toutes les étapes d'un procédé d'après l'une des revendications 1 à 6 peuvent être mises en oeuvre, lorsque le programme informatique est exécuté sur un dispositif programmable et/ou sur un noeud réseau (21, 22, 23, 24).
